Europäisches Patentamt

European Patent Office

Office européen des brevets

(19)

(11) Publication number: **0 089 827**
**B1**

(12) **EUROPEAN PATENT SPECIFICATION**

(45) Date of publication of patent specification: **06.08.86**

(51) Int. Cl.⁴: **G 06 F 15/20**

(21) Application number: **83301519.1**

(22) Date of filing: **18.03.83**

(54) **Apparatus for processing signals and for selectively transmitting input signals.**

(30) Priority: **22.03.82 US 360859**

(43) Date of publication of application:
**28.09.83 Bulletin 83/39**

(45) Publication of the grant of the patent:
**06.08.86 Bulletin 86/32**

(84) Designated Contracting States:
**DE FR GB IT**

(56) References cited:
**US-A-3 305 786**
**US-A-3 378 641**
**US-A-3 426 327**
**US-A-3 794 981**

(73) Proprietor: **THE BABCOCK & WILCOX
COMPANY**
**1010 Common Street P.O. Box 60035**
**New Orleans Louisiana 70160 (US)**

(72) Inventor: **Agarwal, Suresh C.**
**26011 Lakeshore Boulevard**
**Euclid Ohio 44132 (US)**
Inventor: **Forney, Dan E.**
**234 Square Drive**
**Madison Ohio 44057 (US)**
Inventor: **Janecek, Edward D.**
**2320 Westminster Road**
**Cleveland Heights Ohio 44118 (US)**
Inventor: **Keyes, Marion A.**
**120 Riverstone Drive**
**Chagrin Falls Ohio (US)**
Inventor: **Schoeffler, James D.**
**4090 Carroll Boulevard**
**University Heights Ohio (US)**
Inventor: **Willey, Michael S.**
**8653 Apple Hill Road**
**Chagrin Falls Ohio (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to apparatus for processing and selectively transmitting input signals.

Computer systems are widely used to monitor a multiplicity of processes occurring in manufacturing or processing facilities. In order to accomplish this task, sensors are provided to monitor the state and/or condition of particular manufacturing and/or processing variables, and these signals are transmitted to a multiplexer which acts as an interface with the computer system. The multiplexer samples the incoming signals and subsequently transfers the samples to the computer system. The prevailing practice has been to sample these signals periodically at a fixed time intervals and to transmit all of the samples to the computer system. With this technique, which is known as "polling", the sampling period must be at least twice the highest frequency present in the process signals and, typically, it is significantly greater than twice the highest frequency. Because of this requirement for the sampling rate and inasmuch as all samples are transmitted to the computer system and/or a display device, this approach has an inherent problem in that the volume of samples transmitted is enormous, which creates an inherent time delay in the transmission of the samples, thus increasing the system response time, i.e. the time period required between the occurrence of an event in the plant or facility and the completion of the associated data transmission to a computer system and/or a display device. Such an increase in response time can result in an unsafe condition existing within the plant or facility for an inordinate period of time before being detected. In order to minimize this problem, the sampling rate can be decreased. However, such an approach increases the probability that a rapidly changing process variable might not be sampled. Thus, in such an arrangement, the desirable feature of a fast response time tends not to be compatible with a high sampling rate.

US Patent No. US—A—3 378 641 discloses apparatus for processing and selectively transmitting input signals, the apparatus comprising means for determining any difference in value between a current input signal and a previously transmitted signal, means for comparing the difference in value with a predetermined level of difference in value, and means responsive to the comparing means for causing transmission of the current input signal and for causing replacement of the previously transmitted signal with the current input signal only when the difference in value between the current input signal and the previously transmitted signal exceeds the predetermined level of difference in value. The apparatus is in the form of a telecommunications system and is concerned with the blocking of redundant parts of signals, e.g. voice or data signals, to conserve battery power and weight. US—A—3 378 641 is in no way concerned with the problem of minimizing response time, especially in apparatus in which the input signal is sampled, and more especially in a multi-input apparatus incorporating a multiplexer, and in no way provides any indication as to how that problem might be solved.

According to the present invention there is provided apparatus for processing and selectively transmitting input signals, the apparatus comprising means for determining any difference in value between a current input signal and a previously transmitted signal, means for comparing the difference in value with a predetermined level of difference in value, and means responsive to the comparing means for causing transmission of the current input signal and for causing replacement of the previously transmitted signal with the current input signal only when the difference in value between the current input signal and the previously transmitted signal exceeds the predetermined level of difference in value, characterised in that, in use, the current input signal as received by the difference determining means is in real-time (non-stored) form, and in that, in use, the previously transmitted input signal is replaced with the current input signal only after the current signal has been transmitted to a computer system and/or display device.

The feature that the current input signal is in real-time (non-stored) form is believed to enhance system response time. (This contracts with US—A—3 378 641, where the current input signal as applied to the difference determining means is held in an analog or serial-digital store). The feature that the previously transmitted signal is replaced with the current input signal only after the current signal has been transmitted to a computer system and/or display device ensures that processing will not continue if the signal is not received by the computer system and/or display device.

A preferred apparatus embodying the present invention and described hereinbelow, which is operative to sample and multiplex together multiple input signals, enables a high sampling rate to be achieved, in order to preserve accuracy of the apparatus, and minimizes the apparatus response time, by processing a current input signal only when it differs from a previously transmitted signal by a predetermined amount. In this manner, an enormous amount of data is not transmitted from the multiplexer to the computer system and/or the display device, thus minimizing system response time while preserving a high sampling rate. The foregoing is accomplished in the preferred embodiment by converting sampled measurements into digital signal form, inverting the signal and adding the inverted signal to the previously stored signal by means of a binary full adder. The result represents the difference between the value of the incoming signal and the stored signal, and the difference is subsequently compared to a predetermined difference established by a set of thumbwheel switches, by means of a binary comparator. If the difference between the value of the incoming signal and the stored signal exceeds the predetermined difference, a flip-flop is actuated causing the enabling of a set of binary latches which allows the incoming signal to pass therethrough to replace the stored signal in a central processing unit of the computer system and/or to be displayed on the display device. After the transfer has been completed, the system is reset allowing the processing of the next signal. Inasmuch as only those incoming signals which differ from the stored signals by a predetermined amount are allowed to be transferred to the computer system or to the display device, the volume of samples transferred is significantly less, thus minimizing system response time while maintaining a high sampling rate.

The invention will now be further described, by way of illustrative and non-limiting example, with reference to the accompanying drawings, in which:

Figure 1 is an electrical schematic of apparatus constituting a preferred embodiment of the present invention; and

Figure 2 is an electrical schematic of an exception processing circuit of the embodiment of Figure 1.

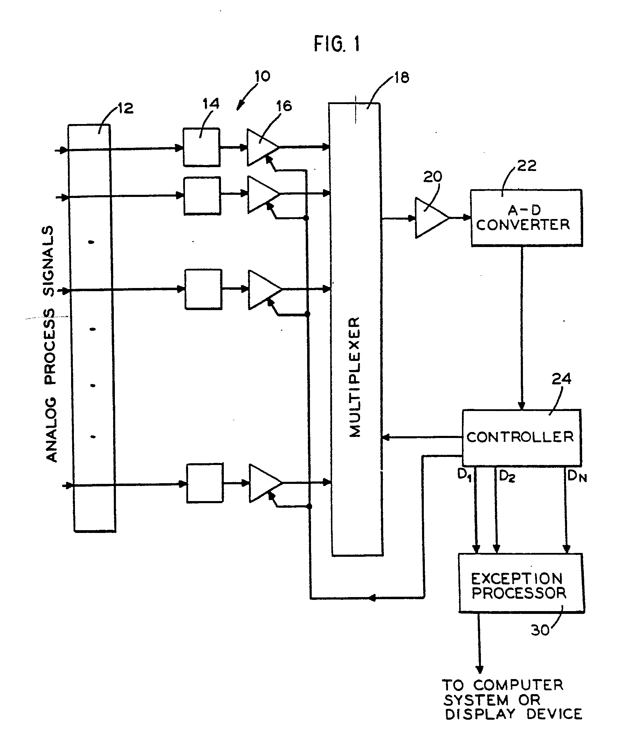

Figure 1 illustrates apparatus for processing signals and for selectively transmitting the signals to a computer system and/or a display device. The illustrated processing apparatus includes an input conditioning portion 10 which comprises a termination facility 12, a plurality of signal conditioning circuits 14, a plurality of sample and hold amplifiers 16, a known type of multiplexer 18, a buffer or sample and hold amplifier 20, an analog to digital (A—D) converter 22, and a controller 24. Input signals from a plant or facility are brought into the apparatus and terminated at the inputs to the termination facility 12 by commonly known techniques and equipment. Each output of the termination facility 12 is connected to an input of a respective one of the signal conditioning circuits 14, which are of known design. The output of each signal conditioning circuit 14 is connected to an input of a respective one of the sample and hold amplifiers 16, which also are of known design. The output of each sample and hold amplifier 16 is utilized as an input to the multiplexer 18. The output of the multiplexer 18 is connected to the input to the buffer or sample and hold amplifier 20, whose output is connected to the input to the analog to digital converter 22. The output of the analog to digital converter 22 is, in turn, connected to the input of the controller 24. Outputs of the controller 24 are connected to the multiplexer 18, the sample and hold amplifiers 16 and to exception processing circuitry 30, hereinafter described.

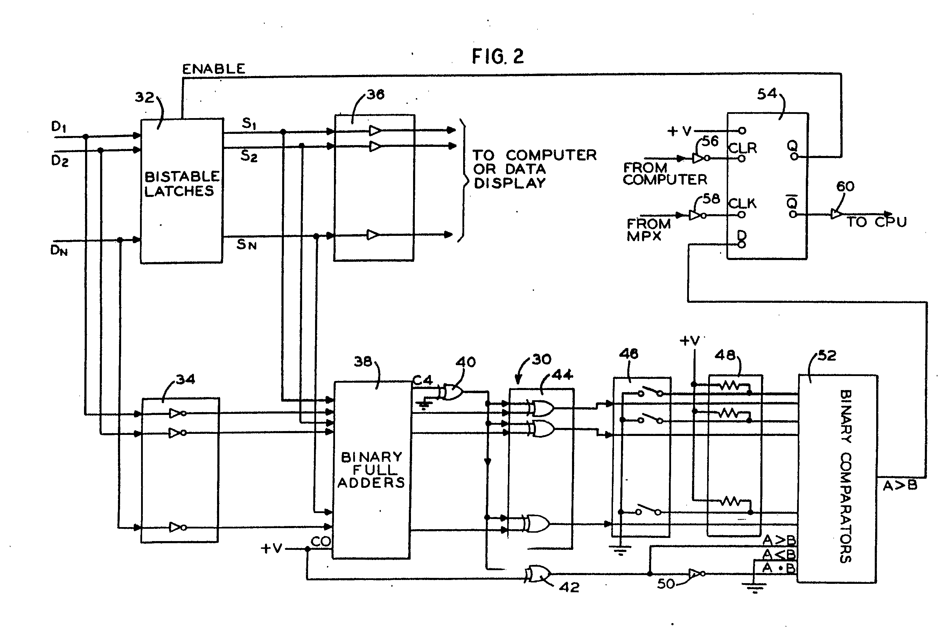

Directing attention now to Figure 2, the exception processing circuitry 30 is illustrated and comprises a plurality of bistable latches 32, a plurality of inverters 34, a plurality of output buffers 36, a plurality of binary full adders 38, exclusive "OR" gates 40 and 42, a plurality of exclusive "OR" gates 44, a plurality of thumbwheel switches 46, a plurality of resistors 48, an inverter 50, a plurality of binary comparators 52, a flip-flop 54, inverters 56 and 58, and an output amplifier 60. A plurality of data bit lines (lines $D_1$ to $D_N$) originate at the output of the controller 24 and each of these lines is connected to an input of the bistable latch 32 and to an input of the inverter 34. The output of each bistable latch 32 is connected to the input of the output buffer 36 and to one of the inputs of the binary full adder 38. Each of the outputs of the inverters 34 is connected to the corresponding other input of the binary full adder 38. A positive voltage (+V) is applied to the carry input (C0) of the binary full adders 38 and to one input to the exclusive "OR" gate 42. The carry output (C4) of the binary adders 38 is connected to an input to the exclusive "OR" gate 40, whose other input is connected to ground potential. The output of the exclusive "OR" gate 40 is connected to an input of each of the exclusive "OR" gates 44 and to the other input to the exclusive "OR" gate 42. Each of the summing outputs of the binary full adders 38 is connected to the other input of the exclusive "OR" gate 44. Each of the outputs of the exclusive "OR" gates 44 is connected to one of the inputs of the binary comparator 52. In addition, each of the thumbwheel switches 46 has one terminal connected to ground potential and the other terminal connected to the other of the inputs of the binary comparator 52. A resistor 48, having a positive voltage (+V) applied at one end thereof, is also connected to each of the other inputs of the binary comparator 52. The output of the exclusive "OR" gate 42 is connected to the A>B input of the binary comparators 52 and to the input to the inverter 50, whose output is connected to the A=B input of the binary comparator 52. The A<B input to the binary comparators 52 is connected to ground potential. The A>B output of the binary comparators 52 is connected to the D input of the flip-flop 54 whose clock input is connected to the multiplexer 18 via the inverter 58 and whose clear input is connected to the central processing unit (not shown) of a computer via the inverter 56. The $\overline{Q}$ output of the flip-flop 54 is connected to the input of the amplifier 60 whose output is connected to the control processing unit of the computer, whereas the Q output of the flip-flop is connected to enable input to the bistable latches 32.

In operation, data in the form of analog signals are received from the plant or facility into the termination facility 12. Each signal is then transmitted through its respective signal conditioning circuit 14 and sample and hold amplifier 16 to the multiplexer 18. Upon receipt of a proper command by the controller 24, a multiplexer point is addressed, and the input signal associated therewith is transmitted to the buffer amplifier 20 whose primary function is to provide a low impedance for the analog to digital converter 22. If the amplifier 20 is a sample and hold type amplifier, this same type of isolation is provided and, in addition, the aperture time of the system may be reduced, i.e., the actual time at which the sample is taken is precisely known and a change in the input signal during the conversion period does not affect the converted value. The controller 24 also provides the control signals for the sample and hold amplifiers 16.

The output signal from the buffer or sample and hold amplifier 20 is then transmitted to the analog to digital converter 22 where it is converted into digital form. The digital output of the converter 22 is then transmitted to the bistable latches 32 via the data lines $D_1$ to $D_N$. One bistable latch 32 is provided for each data line. If a digital (0) exists at the enable terminal for the bistable latches 32, the incoming signal on lines $D_1$ to $D_N$ is not acted upon, and the output lines $S_1$ to $S_N$ of the bistable latches 32 continue to reflect the previously stored signal to the computer (not shown).

To determine the difference between the incoming signal on lines $D_1$ to $D_N$ and the stored signal on lines $S_1$ to $S_N$, digital subtraction is required. With this type of subtraction, not only must the incoming signal be inverted and then added to the stored signal, but a single bit (least significant bit) must then be added to the resultant. In order to accomplish this digital subtraction, the incoming signal on data lines $D_1$ to $D_N$ is also transmitted to the inverters 34 where it is inverted. The inverted data bits are then transmitted to the binary full adders 38 wherein these bits are added to their respective stored data bit counterparts. A positive voltage is applied to the carry input (C0) of the binary adders 38 thus ensuring that the required least significant bit is present.

If the incoming signal on lines $D_1$ to $D_N$ is lower in value than the stored signal on lines $S_1$ to $S_N$, the output of the binary full adders 38 is a positive binary number equal to the difference between the two signals, provided that the carry output (C4), which in this case is a digital (1), is ignored. The carry output (C4) is applied to one terminal of the exclusive "OR" gate 40 which, by having its other input terminal connected to ground potential, produces a digital (1) at its output. The output of the exclusive "OR" gate 40 along with the summing outputs of the binary full adders 38, which are the inputs of the exclusive "OR" gate 44, cause the gates 44 to effectively invert the output of the binary full adders 38 resulting in a negative binary number being applied to one set of inputs of the binary comparators 52. This binary number represents the difference between the incoming signal and the stored signal in negative logic. The output of the exclusive "OR" gate 40 is also applied to one input to the exclusive "OR" gate 42, whose other input is connected to a positive voltage (+V) causing the exclusive "OR" gate 42 to act as an inverter resulting in the production of a digital (0) at its output which is applied to the A>B input terminal of the binary comparators 52. This digital (0) output is also applied to the inverter 50 which inverts same and applies a digital (1) to the A=B input terminal of the binary comparators 52.

These input terminals, along with the A<B input terminal which is at ground potential, are the carry inputs to this device.

If, however, the incoming signal on lines $D_1$ to $D_N$ is greater in value than the stored signal on lines $S_1$ to $S_N$, the output of the binary full adders 38 is a negative binary number equal to the difference between the two signals and the carry output (C4) is a digital (0) resulting in a digital (0) at the output of the exclusive "OR" gate 40. The presence of a digital (0) at the output of gate 40 causes the exclusive "OR" gates 44 to apply the negative binary number directly to one set of inputs of the binary comparators 52 without inverting same. However, because a positive voltage (+V) is applied to the carry input (C0) to the binary adders 38, the negative binary output of the binary adders 38, and thus the negative binary input of the binary comparators 52, is one binary digit larger than the difference between the incoming signal on lines $D_1$ to $D_N$ and the stored signal on lines $S_1$ to $S_N$. To compensate for this additional binary digit, the exclusive "OR" gate 42 effectively adds a single bit to the reference terminal for the binary comparators 52. This is accomplished by applying a positive voltage (+V) to one input to the exclusive "OR" gate 42 while the other input thereof has a digital (0) applied thereto. The result is the production of a digital (1) at its output which is applied to the A>B input terminal of the binary comparators 52. This digital (1) output is also applied to the inverter 50 which inverts same and applies a digital (0) to the A=B input terminal of the binary comparators 52 while the A<B input terminal remains at ground potential.

The difference required between the value of the incoming signal and the stored signal, before the incoming signal is allowed to be transmitted to a central processing unit of a computer or to a display device, is determined by the system operator and is manually entered into the system as a binary number by manual adjustment of the thumbwheel switches 46. Inasmuch as a positive voltage (+V) is applied as an input to each of the binary comparators 52, and this positive voltage can be selectively shorted to ground potential for each of these inputs by selective actuation of the thumbwheel switches 46, a digital (1) or a digital (0) can be applied to an input to each of the comparators 52. Thus, by manually actuating a portion or all of the thumbwheel switches 46, negative binary reference numbers can be established for comparison with the differences between the incoming signal and the stored signal.

The binary comparators 52 compare the difference between the incoming signal and the stored signal with the reference difference produced by the thumbwheel switches 46 and transmit a digital (1) on the A>B output terminal thereof if the former difference exceeds the reference difference. This digital (1) output is applied to the data (D) input of the flip-flop 54. If a signal is received from the multiplexer 18 via the inverter 58 indicating that the incoming signal is valid, the flip-flop 54 is "set" causing the $\overline{Q}$ output thereof to be a digital (0) which, through the buffer amplifier 60, indicates to the computer or the display device to receive or display the incoming signal. While this is occurring, the Q output of the flip-flop 54 becomes a digital (1) which is applied to the enable input of the bistable latches 32 allowing the incoming signal on data lines $D_1$ to $D_N$ to pass therethrough to the central processing unit of a computer or to the display device via the output amplifiers 36. After the transmission of the data to the central processing unit or to the display device has been completed, the computer or the display device sends a signal to the clear terminal of the flip-flop 54 which re-sets same and causes the Q output thereof to become a digital (0). This digital (0) is applied to the enable input to the bistable latches 32 resetting same permitting the entire foregoing process to be repeated.

**Claims**

1. Apparatus for processing and selectively transmitting input signals, the apparatus comprising means (34, 38) for determining any difference in value between a current input signal and a previously transmitted signal, means (52) for comparing the difference in value with a predetermined level of difference in value, and means responsive to the comparing means (52) for causing transmission of the current input signal and for causing replacement of the previously transmitted signal with the current input signal only when the difference in value between the current input signal and the previously transmitted signal exceeds the predetermined level of difference in value, characterised in that, in use, the current input signal as received by the difference determining means (34, 38) is in real-time (non-stored) form, and in that, in use, the previously transmitted input signal is replaced with the current input signal only after the current signal has been transmitted to a computer system and/or display device.

2. Apparatus according to claim 1, including sampling means (16) for sampling an input signal in analog form and means (22) for converting the sample into digital form prior to its receipt by the difference determining means (34, 38).

3. Apparatus according to claim 2, which includes a plurality of sampling means (16) for sampling a plurality of analog input signals and a multiplexer (18) for multiplexing together the plurality of input signals.

4. Apparatus according to claim 2 or claim 3, wherein the difference determining means (34, 38) is operative to determine any difference in value between the current input signal and previously transmitted signal, both of which are in digital form, by a parallel bit processing operation, and the comparing means (52) is operative to compare the difference in value with the predetermined level of difference in value, both of which are in digital form, by a parallel bit processing operation.

5. Apparatus according to claim 4, wherein the determining means comprises parallel inverter means (34) for inverting the bits of the current input signal and parallel adding means (38) for adding the inverted bits to bits of the previously transmitted signal.

6. Apparatus according to claim 4 or claim 5, wherein the comparing means (52) is operative to produce a control signal when the difference in value between the current input signal and the previously transmitted signal exceeds the predetermined level of difference in value, and the means responsive to the comparing means comprises parallel switching means (32) actuatable by said control signal to cause the current input signal to be transmitted in parallel form to the computer system and/or display device.

7. Apparatus according to any one of the preceding claims, including means (46) enabling the predetermined level of difference in value to be varied.

**Patentansprüche**

1. Apparat zur Verarbeitung und selektiven Übertragung von Eingangssignalen, mit Mitteln (34, 38) zur Bestimmung jeglicher Größendifferenz zwischen einem Stromeingangssignal und einem zuvor übermittelten Signal, Mitteln (52) zum Vergleichen der Größendifferenz mit einem vorbestimmten Größendifferenzniveau und Mitteln, welche auf die Vergleichsmittel (52) ansprechen, um die Übertragung des Stromeingangssignales und das Ersetzen des zuvor übermittelten Signals mit dem Stromeingangssignal nur dann zu verursachen, wenn die Größendifferenz zwischen dem Stromeingangssignal und dem zuvor übermittelten Signal das vorbestimmte Niveau der Größendifferenz überschreitet, dadurch gekennzeichnet, daß bei der Benutzung das Stromeingangssignal, wie es von den Differenzbestimmungsmitteln (34, 38) empfangen wird, in Realzeitform (nicht gespeichert) ist und daß bei der Benutzung das zuvor übertragene Eingangssignal mit dem Stromeingangssignal erst ersetzt wird, wenn das Stromsignal zu einem Computersystem und/oder Datensichtgerät übermittelt worden ist.

2. Apparat nach Anspruch 1 mit Abtastmitteln (16) zum Abtasten eines Eingangssignales in analoger Form und Mitteln (22) zum Umwandeln des Abfragewertes in digitale Form, bevor er von den Differenzbestimmungsmitteln (34, 38) empfangen ist.

3. Apparat nach Anspruch 2, der eine Vielzahl von Abtastmitteln (16) aufweist zum Abtasten einer Vielzahl von analogen Eingangssignalen und einem Multiplexer (18) zum Multiplexen der Vielzahl der Eingangssignale.

4. Apparat nach Anspruch 2 oder Anspruch 3, wobei das Differenzbestimmungsmittel (34, 38) betrieblich jede Größendifferenz zwischen dem Stromeingangssignal und dem zuvor übertragenen Signal bestimmt, die beide in digitaler
Form sind, und zwar durch ein paralleles Bitverarbeiten, und das Vergleichsmittel (52) die Größen-
differenz mit dem vorbestimmten Größen-
differenzniveau vergleicht, die beide in digitaler
Form vorliegen, und zwar durch ein paralleles
Bitverarbeiten.

5. Apparat nach Anspruch 4, wobei das Bestimmungsmittel ein paralleles Invertermittel (34) aufweist zum Umwandeln der Bits des Stromeingangssignales sowie parallele Addiermittel (38)
zum Addieren der umgewandelten Bits zu Bits
des zuvor übertragenen Signals.

6. Apparat nach Anspruch 4 oder Anspruch 5,
wobei das Vergleichsmittel (52) im Betrieb ein
Steuersignal erzeugt, wenn die Größendifferenz
zwischen dem Stromeingangssignal und dem
zuvor übertragenen Signal das vorbestimmte
Größendifferenzniveau überschreitet, und daß
auf das Vergleichsmittel ansprechende Mittel ein
Parallelschaltmittel (32) aufweist, welches von
dem Steuersignal betätigbar ist, um das Stromeingangssignal in paralleler Form zu dem
Computersystem und/oder Datensichtgerät überführt werden zu lassen.

7. Apparat nach einem der vorhergehenden
Ansprüche mit Mitteln (46) zum Verändern des
vorbestimmten Größendifferenzniveaus.

**Revendications**

1. Appareil de traitement et de transmission
sélective de signaux d'entrée, cet appareil comprenant des moyens (34, 38) destinés à déterminer toute différence de valeur entre un signal
d'entrée courant et un signal transmis précédemment, des moyens (52) destinés à comparer la
différence de valeur avec un niveau de différence
de valeur prédéterminé, et des moyens qui fonctionnent sous la dépendance des moyens de
comparaison (52) pour donner lieu à la transmission du signal d'entrée courant et au
remplacement du signal transmis précédemment
par le signal d'entrée courant uniquement lorsque
la différence de valeur entre le signal d'entrée
courant et le signal transmis précédemment
dépasse le niveau de différence de valeur
prédéterminé, caractérisé en ce que, pendant
l'utilisation, le signal d'entrée courant qui est reçu
par les moyens de détermination de différence
(34, 38) est un signal en temps réel (non enregistré), et en ce que, pendant l'utilisation, le
signal d'entrée transmis précédemment n'est remplacé par le signal d'entrée courant qu'après
que le signal d'entrée courant a été transmis à un
système informatique et/ou un dispositif de
visualisation.

2. Appareil selon la revendication 1, comprenant des moyens d'échantillonnage (16) destinés
à échantillonner un signal d'entrée sous forme
analogique, et des moyens (22) destinés à convertir l'échantillon sous forme numérique avant
sa réception par les moyens de détermination de
différence (34, 38).

3. Appareil selon la revendication 2, comprenant un ensemble de moyens d'échantillonnage
(16) destinés à échantillonner un ensemble de
signaux d'entrée analogiques, et un multiplexeur
(18) destiné à multiplexer l'ensemble de signaux
d'entrée.

4. Appareil selon la revendication 2 ou la
revendication 3, dans lequel les moyens de
détermination de différence (34, 38) déterminent
toute différence de valeur entre le signal d'entrée
courant et un signal transmis précédemment, qui
sont tous deux sous forme numérique, par une
opération de traitement en parallèle au niveau
des bits, et les moyens de comparaison (52)
comparent la différence de valeur avec le niveau
de différence de valeur prédéterminé, qui sont
tous deux sous forme numérique, par une opération de traitement en parallèle au niveau des bits.

5. Appareil selon la revendication 4, dans lequel
les moyens de détermination comprennent des
moyens inverseurs parallèles (34) destinés à
inverser les bits du signal d'entrée courant et des
moyens d'addition parallèles (38) destinés à additionner les bits inversés aux bits au signal
transmis précédemment.

6. Appareil selon la revendication 4 ou la
revendication 5, dans lequel les moyens de
comparaison (52) produisent un signal de commande lorsque la différence de valeur entre le
signal d'entrée courant et le signal transmis
précédemment dépasse le niveau de différence
de valeur prédéterminé, et les moyens fonctionnant sous la dépendance des moyens de
comparaison comprennent des moyens de
commutation parallèles (32) qui peuvent être
actionnés par le signal de commande pour faire
en sorte que le signal d'entrée courant soit
transmis sous forme parallèle au système
informatique et/ou au dispositif de visualisation.

7. Appareil selon l'une quelconque des revendications précédentes, comprenant des moyens
(46) qui permettent de faire varier le niveau de
différence de valeur prédéterminé.

**0 089 827**

FIG. 1

ANALOG PROCESS SIGNALS

MULTIPLEXER

A-D CONVERTER

CONTROLLER

$D_1$  $D_2$  $D_N$

EXCEPTION PROCESSOR

TO COMPUTER SYSTEM OR DISPLAY DEVICE

1

FIG. 2